# EUROPEAN PATENT APPLICATION

(11) **EP 4 571 352 A1**
(43) Date of publication of application: **18.06.2025**
(21) Application number: 23216571.2
(22) Date of filing: 14.12.2023
(51) Int. Cl.: G01S 7/48, G01S 7/40, G01S 7/497, G01S 7/52, G01S 13/931, G01S 15/931, G01S 17/931

(54) **METHOD FOR RECOGNIZING A MISALIGNMENT OF A SENSOR AT A VEHICLE AND SENSORSYSTEM**

(71) Applicant: Robert Bosch GmbH, 70442 Stuttgart (DE)
(72) Inventor: Klotz, Albrecht, 71229 Leonberg (DE); Nagy, David Kristof, 1103 Budapest (HU); Schmid, Dirk, 75397 Simmozheim (DE); Meszaros, Albert, 70499 Stuttgart-Weilimdorf (DE)

(57) **Abstract**

The present invention pertains to a method for recognizing a misalignment of at least one sensor (SN1) in a vehicle, comprising the steps of sending (S1) of a predefined signal by at least one sensor (SN1) which is mounted in a predefined position of a vehicle in a sensing direction of the at least one sensor (SN1); receiving (S2a) of a reflection signal by the at least one sensor (SN1) from the sensing direction and measuring (S2b) of a time span between sending and receiving of the signal, wherein a clutter peak in the reflection signal over time is determined; comparing (S3) a receiving time of the clutter peak at the at least one sensor (SN1) with a predefined clutter peak time for the at least one sensor (SN1) which corresponds to a default sensor mounting orientation and determining whether there is a deviation in the receiving time of the clutter peak from the predefined clutter peak time; recognizing (S4) of the deviation in the receiving time of the clutter peak from the predefined clutter peak time and identifying a modification of the sensing direction of the at least one sensor (SN1) as vertical downward tilt relative to the default sensor mounting orientation if the receiving time of the clutter peak is shorter than the predefined clutter peak time and identifying the modification of the sensing direction of the at least one sensor (SN1) as vertical upward tilt relative to the default sensor mounting orientation if the receiving time of the clutter peak is longer than the predefined clutter peak time; and estimating (S5) of an amount of the modification of the sensing direction of the at least one sensor (SN1) from an absolute value of a difference between the receiving time of the clutter peak and the predefined clutter peak time according to a predefined relation for the at least one sensor (SN1).

## Description

The present invention pertains to a method for recognizing a misalignment of a sensor at a vehicle and to a sensorsystem.

### Prior art

In vehicles it is common to instal distance sensors in the front and rear bumper or sensors for Radar and Lidar systems. The sensors are typically mounted at a predefined position where its height from ground and other position parameters can be exactly known and the received signal can be evaluated using these information.

Common small road accidents can influence the orientation of the sensor, for example a damage at the the car's bumper can occur, hence altering the installation of ultrasonic sensors in the bumper significantly. Since this does not necessarily mean that the sensors are damaged as well, they could operate as usual, but for example with reduced field of view or more effected by ground clutter. It can be recognized that if the sensor's installation changes significantly, the reliability of its provided signal can decrease.

Document DE 10 2015 120 659 A1 describes an ultrasound sensor device.

### Disclosure of the invention

The invention pertains to a method for recognizing a misalignment of a sensor at a vehicle according to claim 1 and to a sensorsystem according to claim 8.

Further embodiments are subject-matter of the dependent claims.

### Advantages of the invention

The idea on which the invention is based regards an improvement of a misalignment detection in order to detect changes in an orientation of the sensor and provide this information to the decision making components that may react, and notify the driver about the required repairs.

The invention regards a method for recognizing a misalignment of at least one sensor at a vehicle, comprising the steps of sending of a predefined signal by at least one sensor which is mounted in a predefined position of a vehicle in a sensing direction of the at least one sensor; receiving of a reflection signal by the at least one sensor from the sensing direction and measuring of a time span between sending and receiving of the signal, wherein a clutter peak in the reflection signal over time is determined; comparing a receiving time of the clutter peak at the at least one sensor with a predefined clutter peak time for the at least one sensor which corresponds to a default sensor mounting orientation and determining whether there is a deviation in the receiving time of the clutter peak from the predefined clutter peak time; recognizing of the deviation in the receiving time of the clutter peak from the predefined clutter peak time and identifying a modification (from default) of the sensing direction of the at least one sensor as vertical downward tilt relative to the default sensor mounting orientation if the receiving time of the clutter peak is shorter than the predefined clutter peak time and identifying the modification of the sensing direction of the at least one sensor as vertical upward tilt relative to the default sensor mounting orientation if the receiving time of the clutter peak is longer than the predefined clutter peak time; and estimating of an amount of the modification of the sensing direction of the at least one sensor from an absolute value of a difference between the receiving time of the clutter peak and the predefined clutter peak time according to a predefined relation for the at least one sensor.

The method thus provides an ability to detect misalignment of a sensor, for example of an ultrasonic sensor.

At least one sensor, for example an ultrasonic sensor, can be mounted on a vehicle and measures a distance to an object and/or a ground in front of the sensor with the so called time of flight method. In particular, the sensor can emit an ultrasonic burst signal and then switch to a receive mode, and waiting to receive some echoes reflected by objects or the road surface. A time interval measured between emitting the burst as a predefined signal (frequency, duration, amplitudes etc.) and receiving an echo (the reflection signal) is proprtional to the distance between sensor and object and/or ground, i.e. measuring echo travel time is equivalent to measuring distance.

In the reflection signal a magnitude of the raw signal which contains the received echoes typically shows peaks when object echoes or echoes from the ground are received. Reflections from the ground can appear in form of many small object echoes, for example within a distance range between approximately 0.5 m and 3.0 m, with a maximum magnitude at a distance of approximately 1.5 m.

An exact distance between object/ground and the sensor where the maximum of the clutter peak appears, can depend on the default sensor position and its orientation, especially height from the ground and the vertical angle of the sensor orientation relative to the ground.

Due to an (road) accident both the sensor height and the angle of its orientation with regard to a default orientation and default positon can change, but the expectation is that the angle change would be more common and significant in terms of affecting the clutter signal.

As relevant information for evaluation of misalignment the measured time and/or position (distance from the sensor determined from the measured time) of the clutter peak can be determined. Such a measured time can depend on the sensor's vertical angle. For the case of an ultrasonic sensor which in default can shoot parallel to the ground as a reference, if the vertical angle increases such that the sensor points upwards afterwards (further than before), the time of the clutter peak will increase and the distance from the sensor increases, and if the angle decreases so that the sensor points downwards, then the time of the peak decreases and the distance also decreases.

The receiving time of the reflection signal can be a predefined time interval over which the clutter curve is recorded and during which a maximum search of the clutter peak can be performed.

The time span between sending and receiving can also overlap the sending and receiving moments, due to predefined measuring conditions.

The (default or modified) sensor mountign orientation corresponds to the corresponding sensing direction towards which the sensor points (default or modified).

According to an embodiment of the invention the at least one sensor is an ultrasonic sensor or a Radar sensor or a Lidar sensor.

The invention can be applied to any other sensor using the time of flight method, e.g. Radar or Lidar sensors.

According to an embodiment of the invention the receiving time of the clutter peak and/or the predefined clutter peak time is/are recalculated to a particular distance (to receiving time or predefined time and a difference between them can correspond to a distance shift oft he clutter peak due to modifications oft he sensor orientation) of the clutter peak from the at least one sensor and the deviation in the receiving time of the clutter peak from the predefined clutter peak time is transformed to a devition in distance of the clutter peak from the at least one sensor.

According to an embodiment of the invention the amount of the modification of the sensing direction of the at least one sensor is evaluated from the absolute value of a difference in distance of the measured clutter peak and the default distance of the clutter peak and the predefined relation for the at least one sensor defines a change in vertical angle with regard to a change in the distance of the clutter peak from the at least one sensor.

The predefined relation for the at least one sensor for a change in vertical angle with regard (in dependence to) to a change in the distance of the clutter peak can for example be defined for a particular sensor position at the vehicle and it can be known for this position how huge the impact of the shift in the distance can be for a particular change of the vertical angle of the sensors orientation (and vice versa). For example, ultrasonic sensors can be mounted in bumpers often between 30cm - 70cm. At a 50cm relative height to ground the clutter peak shifts approximately 1 cm/1° in both directions (up/down).

According to an embodiment of the invention the reflection signal is smoothed by a predefined smoothing algorithm and a smoothed clutter curve over time is computed and wherein a maximum search is performed on the clutter curve.

Inisde the sensor ASIC (or the control unit receiving the sensor raw signal) the received signal can be smoothed with an appropriate smoothing algorithm (such as Savitzky-Golay filter, Cascade Averaging filters etc) creating a smooth clutter "hill". On the smoothed clutter hill a maximum search can be performed.

For maximum search several methods are sufficient for example an iterative maximum search or zero crossings of the derivative signal.

According to an embodiment of the invention a plurality of sensors which are mounted in at least one bumper of the vehicle are used instead of the at least one sensor and the amount of the modification of the sensing direction is estimated for each of the sensors (from known relations between distance shift and orientation angle and/or from relative deviations towards other sensors or at other sensors) and a particular modification of the sensing direction of at least one of the sensors is proved by comparing its modification to at least one of the remaining modifications of the sensing directions of the remaining sensors.

For example a shift at one sensor (of the clutter peak) due to load in the vehicle should be also recognized at other sensors.

According to an embodiment of the invention the amounts and directions of the modifications of the sensors in a front bumper and sensors in a rear bumper are commonly evaluated and a suitable influence (for which also all other sensor may react for clutter peak sensing) of a change in direction of motion and/or orientation and/or load of the vehicle on the front bumper and on the rear bumper is considered and excluded from identifying a misalignment.

For the case that a measured time of the clutter peak for a predefined minimum number of sensors or of all sensors are available, this can be used as main input to the misalignment detection algorithm in software. Bumper damage may effect only a part of a bumper. So the algorithm intends to find misaligned sensors while other sensors are not misaligned. If all sensors are misaligned there will be no deviation between them. Since ultrasonic systems in vehicles typically consist of several sensors per bumper it is possible that the average clutter peak location value can be calculated for each sensor. This average value can further be compared to expected (stored) values for a variety of ground (for example asphalt) types. If a sensor's average peak (time/position, a peak can be calculated at every measurement cycle and averaged over a set number of measurement cycles) differs from the expected value significantly (according to a predefined range), the difference can be compared to other sensors' difference values. With two comparisons it can become possible to negate the clutter peak shift coming from changing ground surface, because it would effect multiple sensors. These two comparisons can for example consider for first to compare the average peak to the expected one (this is based on the default height and angle) and for second get the deviation of the average from the expected for each sensor and compare these differences. If one or more sensor's deviation is way more significant then the rest then probably misalignment is present.

For the case of small and local damages it can be considered that small bumper dents can be locally effecting only a few of the sensors in the bumper. If the load of the vehicle changes it would also effect all sensors in front and rear at the same time. If the weight distribution is even, all clutter peaks are expected to have shorter time values. If the weight distribution is uneven, then the front and rear bumper sensors' clutter peak shift in opposite directions.

The invention regards a Sensorsystem comprising at least one sensor mounted in a predefined position of a vehicle; a controller device which is connected to the at least one sensor and which is configured to execute the method according to an embodiment of the invention.

According to an embodiment of the invention the controller device is comprised in the at least one sensor or is a device separated from the at least one sensor.

According to an embodiment of the invention the sensorsystem comprises a plurality of sensors which are mounted in at least one bumper of the vehicle and are connected to the controller and wherein a method according to an embodiment oft he invention regarding a plurality of sensors is performed.

The method can be performed and implemented to an ASIC but is not limited thereto. It can be also applied on ECU in case sensor raw data from an ASIC (USS) to ECU is transmitted.

High environmental noise or objects in the distance range of the expected clutter peak may influence the value. Therefore, if a noise value exceeds a threshold or if object echoes are detected in clutter area than the misalignment detection can be paused. Considering ground reflections, if there are objects, they create much stronger reflections than the ground or the ground can even be invisible behind a wall for example. Clutter area can be where the peak search is applied.

The sensorsystem can be also characterized by the features and advantages of the method and vice versa.

Further features and advantages of embodiments can arise from the following description with regard to the figures.

### Description of figures

The invention is further specified by the description of the schematic figures.
- Fig. 1: shows a schematic block diagram of method steps of a method for recognizing a misalignment of at least one sensor in a vehicle according to an embodiment of the invention;
- Fig. 2: shows processing of the received data from the sensor and providing the clutter peak data in a method according to an embodiment of the invention;
- Fig. 3: shows the influence of the sensor orientation on the position of the clutter peak which is considered in a method according to an embodiment of the invention;
- Fig. 4: shows detail steps of a method for recognizing a misalignment of at least one sensor using also other sensors according to an embodiment of the invention.

In the figures equal or corresponding elements are shown by same reference numerals.

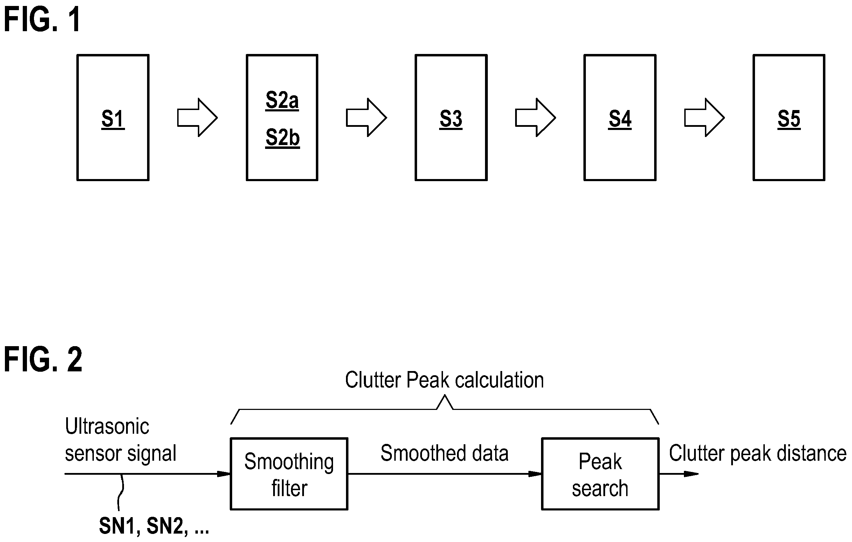

Fig. 1 shows a schematic block diagram of method steps of a method for recognizing a misalignment of at least one sensor in a vehicle according to an embodiment of the invention.

The method for recognizing a misalignment of at least one sensor in a vehicle, comprises the steps of sending S1 of a predefined signal by at least one sensor which is mounted in a predefined position of a vehicle in a sensing direction of the at least one sensor; receiving S2a of a reflection signal by the at least one sensor from the sensing direction and measuring S2b of a time span between sending and receiving of the signal, wherein a clutter peak in the reflection signal over time is determined; comparing S3 a receiving time of the clutter peak at the at least one sensor with a predefined clutter peak time for the at least one sensor which corresponds to a default sensor mounting orientation and determining whether there is a deviation in the receiving time of the clutter peak from the predefined clutter peak time; recognizing S4 of the deviation in the receiving time of the clutter peak from the predefined clutter peak time and identifying a modification of the sensing direction of the at least one sensor as vertical downward tilt relative to the default sensor mounting orientation if the receiving time of the clutter peak is shorter than the predefined clutter peak time and identifying the modification of the sensing direction of the at least one sensor as vertical upward tilt relative to the default sensor mounting orientation if the receiving time of the clutter peak is longer than the predefined clutter peak time; and estimating S5 of an amount of the modification of the sensing direction of the at least one sensor from an absolute value of a difference between the receiving time of the clutter peak and the predefined clutter peak time according to a predefined relation for the at least one sensor.

Fig. 2 shows processing of the received data from the sensor and providing the clutter peak data in a method according to an embodiment of the invention.

An ultrasonic sensor can provide a time signal (reflection signal), for example at a predefined condition of 5kSa/s or different thereto.

Further, the controller, ASIC and/or ECU can conduct the clutter peak calculation according to the method, wherein an smoothing filter can be applied and a peak search (maximum search) can be conducted on the smoothed data. From these result the distance of the clutter peak to the sensor can be computed.. The peak can be at a distance where the sum of all ground reflections is the strongest.

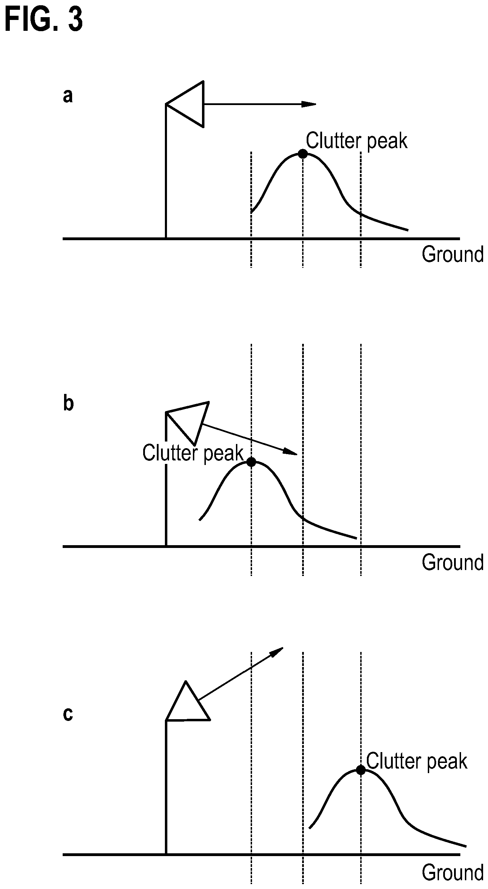

Fig. 3 shows the influence of the sensor orientation on the position of the clutter peak which is considered in a method according to an embodiment of the invention.

Fig. 3 shows three different situations a, b and c where three different orientations of the sensor are considered. In image a the orientation of the sensor is horizontal with a deviation angle from the horizontal direction of zero degrees. This orientation corresponds to a default orientation of the sensor and for this known mounting position of the sensor it is also recognized where to expect the clutter peak as corresponding to default settings/orientation and compute a default time/distance of the clutter peak.

In image b a situation is shown where the orientation of the sensor has a deviation from the horizontal direction such that a normal on the sensor front area points downward relative to the horizontal direction. In this case the clutter peak (from ground) shifts closer to the sensor and the distance between the peak and the sensor lowers when compared to the default case of image a.

In image c a situation is shown where the orientation of the sensor has a deviation from the horizontal direction such that a normal on the sensor front area points upward relative to the horizontal direction. In this case the clutter peak (from ground) shifts further away from the sensor and the distance between the peak and the sensor increases when compared to the default case of image a.

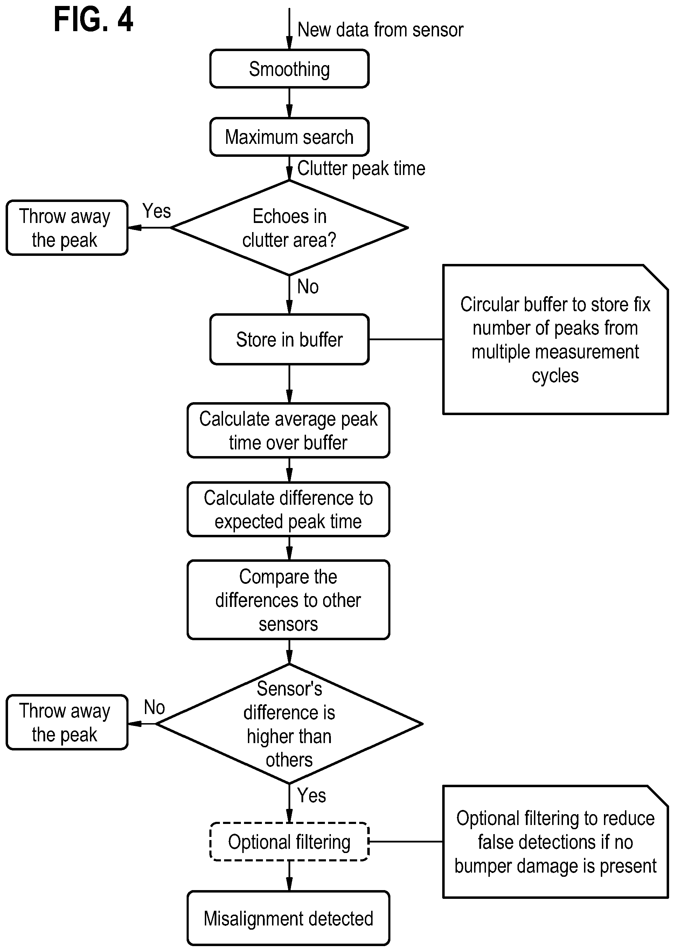

Fig. 4 shows detail steps of a method for recognizing a misalignment of at least one sensor using also other sensors according to an embodiment of the invention.

After the reflection signal is received by the sensor a step of smoothing can be performed. By performing a maximum search in the signal the clutter peak can be recognized. In a subsequent step it can be checked whether there are any echoes in the clutter area (reflections from objects that are inside the relevant area for peak search are relevant; objects can create stronger reflections than the ground essentially covering the ground reflection) and if yes the peak is not used further. For the case that said echoes are not present the peak can be stored in a buffer (inside a software solution, the peak from the last couple of cycles can be stored to create a history for statistical calculation like average over time), for example in a circular buffer for storing a fix number of peaks from multiple measurement cycles (these sensors monitor the surrounding of a vehicle, so they try to measure distances to neihbouring objects as fast as possible, maybe 10 times a second and each new measurement is referred as a new cycle). Further, an average peak time over the buffer (average over time or average over the recorded history of peaks for one sensor, the same can be done for multiple sensors, each having their own average peak over time ) can be calculated and a difference to an expected peak time can be calculated. Said difference can be compared to a difference which has been calculated for another sensor or more than one. For the case that the difference of the particular sensor is recognized as being lower than differences from other sensors the particular peak is not further used. For the case that the difference of the particular sensor is recognized as being higher than differences from other sensors an optional filtering (it can be beneficial to set additional criteria like the vehicle has to travel certain distance or the misalignment has to be detected multiple times in the software before any system reaction like message to the vehicle's driver; for a poper robustness the vehicle needs to move certain distance, this can negate the effect of different asphalt types in a static scene) can be performed and as a result a misalignment is detected (even without the optional filtering; already as result wherein in this case the final decision is "misalignment detected" ). The optional filtering can help to reduce false detections if no or only too little bumper damage is present (false detection can be when the result "misalignment detected" is produced even though in reality there was no bumper damage, no misalignment).

The invention is not limited to the embodiments shown but can be modified in various manner in the light of the invention.

## Claims

1. Method for recognizing a misalignment of at least one sensor (SN1) at a vehicle, comprising the following steps:
- sending (S1) of a predefined signal by at least one sensor (SN1) which is mounted in a predefined position of a vehicle in a sensing direction of the at least one sensor (SN1);
- receiving (S2a) of a reflection signal by the at least one sensor (SN1) from the sensing direction and measuring (S2b) of a time span between sending and receiving of the signal, wherein a clutter peak in the reflection signal over time is determined;
- comparing (S3) a receiving time of the clutter peak at the at least one sensor (SN1) with a predefined clutter peak time for the at least one sensor (SN1) which corresponds to a default sensor mounting orientation and determining whether there is a deviation in the receiving time of the clutter peak from the predefined clutter peak time;
- recognizing (S4) of the deviation in the receiving time of the clutter peak from the predefined clutter peak time and identifying a modification of the sensing direction of the at least one sensor (SN1) as vertical downward tilt relative to the default sensor mounting orientation if the receiving time of the clutter peak is shorter than the predefined clutter peak time and identifying the modification of the sensing direction of the at least one sensor (SN1) as vertical upward tilt relative to the default sensor mounting orientation if the receiving time of the clutter peak is longer than the predefined clutter peak time; and
- estimating (S5) of an amount of the modification of the sensing direction of the at least one sensor (SN1) from an absolute value of a difference between the receiving time of the clutter peak and the predefined clutter peak time according to a predefined relation for the at least one sensor (SN1).

2. Method according to claim 1, wherein the at least one sensor (SN1) is an ultrasonic sensor or a Radar sensor or a Lidar sensor.

3. Method according to any of claims 1 or 2, wherein the receiving time of the clutter peak and/or the predefined clutter peak time is/are recalculated to a particular distance of the clutter peak from the at least one sensor (SN1) and the deviation in the receiving time of the clutter peak from the predefined clutter peak time is transformed to a devition in distance of the clutter peak from the at least one sensor (SN1).

4. Method according to claim 3, wherein the amount of the modification of the sensing direction of the at least one sensor (SN1) is evaluated from the absolute value of a difference in distance of the measured clutter peak and the default distance of the clutter peak and the predefined relation for the at least one sensor (SN1) defines a change in vertical angle with regard to a change in the distance of the clutter peak from the at least one sensor (SN1).

5. Method according to any of claims 1 to 4, wherein the reflection signal is smoothed by a predefined smoothing algorithm and a smoothed clutter curve over time is computed and wherein a maximum search is performed on the clutter curve.

6. Method according to any of claims 1 to 5, wherein a plurality of sensors (SN1, SN2, ..., SNn) which are mounted in at least one bumper of the vehicle are used instead of the at least one sensor (SN1) and the amount of the modification of the sensing direction is estimated for each of the sensors (SN1, SN2, ..., SNn) and a particular modification of the sensing direction of at least one of the sensors is proved by comparing its modification to at least one of the remaining modifications of the sensing directions of the remaining sensors.

7. Method according to claim 6, wherein the amounts and directions of the modifications of the sensors in a front bumper and sensors in a rear bumper are commonly evaluated and a suitable influence of a change in direction of motion and/or orientation and/or load of the vehicle on the front bumper and on the rear bumper is considered and excluded from identifying a misalignment.

8. Sensorsystem (10) comprising:
- at least one sensor (SN1) mounted in a predefined position of a vehicle;
- a controller device which is connected to the at least one sensor (SN1) and which is configured to execute the method according to any of claims 1 to 7.

9. Sensorsystem (10) according to claim 8, wherein the controller device is comprised in the at least one sensor (SN1) or is a device separated from the at least one sensor (SN1).

10. Sensorsystem (10) according to claim 8 or 9, which comprises a plurality of sensors (SN1, SN2, ..., SNn) which are mounted in at least one bumper of the vehicle and are connected to the controller and wherein a method according to claim 6 or 7 is performed.
